# EUROPÄISCHE PATENTSCHRIFT

(11) **EP 1 066 734 B1**
(45) Veröffentlichungstag und Bekanntmachung des Hinweises auf die Patenterteilung: **16.01.2002**
(21) Anmeldenummer: 99911616.3
(22) Anmeldetag: 23.02.1999
(51) Int. Cl.: H04Q 11/04

(54) **VERFAHREN ZUM WEITERLEITEN DIGITALER, IN EINEM TDMA-SYSTEM ERZEUGTEN INFORMATION ÜBER EINE ATM-ÜBERTRAGUNGSSTRECKE**
METHOD FOR FORWARDING DIGITAL INFORMATION GENERATED IN A TDMA SYSTEM VIA AN ATM TRANSMISSION PATH
PROCEDE DE TRANSMISSION, PAR L'INTERMEDIAIRE D'UNE SECTION DE TRANSMISSION MTA, D'UNE INFORMATION NUMERIQUE PRODUITE DANS UN SYSTEME AMRT

(30) Priorität: 26.03.1998 DE 19813502
(43) Veröffentlichungstag der Anmeldung: 10.01.2001
(73) Patentinhaber: SIEMENS AKTIENGESELLSCHAFT, 80333 München (DE)
(72) Erfinder: SCHNEEBERGER, Stefan, D-85591 Vaterstetten (DE)
(86) Internationale Anmeldenummer: DE9900484
(87) Internationale Veröffentlichungsnummer: WO9949694

(56) Entgegenhaltungen:
- US-A- 5 568 482
- MASAHIRO UMEHIRA ET AL: "ATM WIRELESS ACCESS FOR MOBILE MULTIMEDIA: CONCEPT AND ARCHITECTURE" IEEE PERSONAL COMMUNICATIONS, Bd. 3, Nr. 5, 1. Oktober 1996 (1996-10-01), Seiten 39-48, XP000635699 ISSN: 1070-9916

## Beschreibung

Die Erfindung bezieht sich auf ein Verfahren zum Weiterleiten digitaler, in einem TDMA-System erzeugten Information, bei welchem die Übertragungsrahmen jeder Verbindung in ATM-Zellen verpackt und diese Zellen über eine ATM-Übertragungsstrecke übertragen werden.

Weiters bezieht sich die Erfindung auf eine Basisstation eines nach einem TDMA-Verfahren arbeitenden Mobilfunksystems, die zum Empfang von Informationen mobiler Teilnehmer und zur Weiterleitung dieser Informationen zu Steuer- und Verarbeitungseinheiten des Mobilfunknetzes eingerichtet ist.

Die bekannten GSM-Mobilfunksysteme (Global System for Mobile Communication) verwenden ein TDMA-Übertragungsverfahren (Time Division Multiple Access), bei welchem in gleichmäßigen Zeitabständen, hier z.B. 20 ms, für jede aktive Verbindung in einer Basisstation ein Übertragungsrahmen erzeugt und sodann in Richtung des BSC (Base Station Controller) übertragen wird, was üblicherweise über eine PCM 30-Strecke mit z.B. 2 MBit/s erfolgt. Die Übertragungsrahmen sind z.B. 260 Bit lang, wovon alle 125 µs zwei Bit in jeden von 130 PCM-Rahmen eingefügt werden. In diesem Fall dauert der vollständige Abtransport eines Übertragungsrahmens 16,25 ms.

ATM, die Kurzform für "Asynchronous Transfer Mode" ist eine Netzwerktechnologie, die zum. Transport aller bekannten Signaldaten, wie reine Daten, Sprach- und Videodaten etc. geeignet ist, wobei die Bezeichnung ATM gelegentlich als Synonym für B-ISDN (= Broadband Integrated Services Digital Network) verwendet wird. Charakteristisch für ATM ist die Strukturierung in Zellen gleicher Länge. Die zu vermittelnde Information wird auf ATM-Zellen aufgeteilt, nämlich in Packets zu 53 Byte, die einen Zellenkopf (Header) mit 5 Byte und Nutzinformation (Payload) zu 48 Byte tragen. Dabei identifiziert die Kopfinformation eine bestimmte virtuelle Verbindung. Im Gegensatz zu einem TDMA-Verfahren, bei welchem Zeitschlitze verschiedenen Typen von Datenverkehr im vorhinein zugeordnet sind, wird der bei einer ATM-Schnittstelle ankommende Datenverkehr in die erwähnten 53-Byte-Zellen segmentiert und diese Zellen werden sequentiell, so wie sie erzeugt wurden, weitergesandt. Nähere Einzelheiten zu ATM sind der Literatur entnehmbar. Beispielsweise sei hier genannt: "ATM-Networks, Concepts, Protocols and Applications", von Händel, Huber und Schröder, Verlag Addison-Wesley-Longman, 2. Aufl. 1994 (ISBN 0-201-42274-3).

Will man die Übertragung der Information aus dem TDMA-System statt über eine PCM 30-Strecke über eine ATM-Strecke durchführen, so steht die volle Übertragungsbandbreite, ggf. abzüglich der Overheads für ATM-Headers, zur Verfügung und ein 260 Bit-Rahmen kann bei vergleichbarer Übertragungsgeschwindigkeit von 2 MBits/s mit ca. 126,95 µs, zugzüglich der erwähnten ATM-Overheads, übertragen werden.

Werden nun mehrere Übertragungsrahmen im TDMA-System gleichzeitig erzeugt oder werden Übertragungsrahmen erzeugt, solange noch andere Übertragungsrahmen auf den Abtransport warten, so entsteht eine Wartezeit, die im schlechtesten Fall 15 ms betragen kann, falls sämtliche Übertragungsrahmen zum selben Zeitpunkt für die ATM-Übertragung fertiggestellt werden, wobei das oben genannte Beispiel mit seinen Zahlenwerten angenommen wird. Derartige Wartezeiten machen aber die Vorteile, die eine ATM-Übertragung bietet, zum Teil zunichte.

Es ist daher eine Aufgabe der Erfindung, ein Verfahren zu schaffen, welches den soeben beschriebenen Nachteil beseitigt.

Diese Aufgabe wird mit einem Verfahren der eingangs genannten Art gelöst, bei welchem erfindungsgemäß die Zeitpunkte der Fertigstellung der Übertragungsrahmen der Verbindungen für die einzelnen Trägerfrequenzen des TDMA-Systems mit einer solchen zeitlichen Versetzung gewählt werden, daß diese Zeitpunkte über jeden einzelnen Zeitrahmen des TDMA-Systems weitgehend gleichmäßig verteilt sind.

Dank der Erfindung geht der durch die ATM-Technik erreichbare Zeitgewinn beim Abtransport der Übertragungsrahmen nicht durch eine Verlängerung der Wartezeit zwischen der Fertigstellung des Übertragungsrahmens und dem Beginn des Abtransports verloren, sodaß tatsächlich eine Verringerung der Verzögerungszeiten erzielbar ist.

Die Erfindung zeigt besondere Vorteile, falls die Information in einem GSM-Mobilfunksystem erzeugt und von einer Basisstation zu Steuer- und Verarbeitungseinheiten des Mobilfunknetzes in ATM-Zellen übertragen wird.

Die Erfindung eignet sich besonders für GSM-Mobilfunksysteme, daher sei an dieser Stelle ausdrücklich darauf hingewiesen, daß sich die Erfindung in gleicher Weise für derzeit in Entwicklung befindliche, geplante Systeme, wie UMTS (Universal Mobile Telecommunication System) bzw. Systeme der "Dritten Generation" eignet.

Zweckmäßigerweise kann dabei die Information in ATM-Zellen zu einer Basisstationssteuerung übertragen werden.

Eine weitere Aufgabe der Erfindung, nämlich die bereits erwähnten Probleme in Zusammenhang mit einem Mobilfunksystem zu meistern, wird - ausgehend von einer Basisstation der oben erwähnten Art - dadurch gelöst, daß die Basisstation ein Ausgangsdatenfeld aufweist, welches zur Bereitstellung der Übertragungsrahmen für jede Verbindung eingerichtet ist, das Ausgangsdatenfeld mit einer ATM-Paketierung verbunden ist, die zum Verpacken der Übertragungsrahmen in ATM-Zellen eingerichtet ist, welche zur Weiterleitung an eine Steuer- und Verarbeitungseinheit bestimmt sind, und das Ausgangsdatenfeld dazu eingerichtet ist, die Übertragungsrahmen der Verbindungen für die einzelnen Trägerfrequenzen des TDMA-Systems mit einer solchen zeitlichen Versetzung zu Zeitpunkten fertigzustellen, die über jeden einzelnen Zeitrahmen des TDMA-Systems weitgehend gleichmäßig verteilt sind.

Die Erfindung ist dabei besonders für die Basisstation eines GSM-Netzes zu empfehlen.

Die Erfindung samt weiteren Vorteilen ist im folgenden anhand beispielsweiser Ausführungen näher erläutert, die in der Zeichnung veranschaulicht sind. In dieser zeigen
Fig.1 in einem Blockschaltbild einen Ausschnitt eines Mobilfunknetzes mit einer Basisstation, einem Mobilteil und einer Basisstationssteuerung,
Fig.2 in einem Diagramm die Fertigstellungszeitpunkte der Übertragungsrahmen innerhalb eines Zeitrahmens des TDMA-Systems nach dem Stand der Technik und
Fig.3 in einem zu Fig.2 analogen Diagramm die Fertigstellungszeitpunkte gemäß der Erfindung.

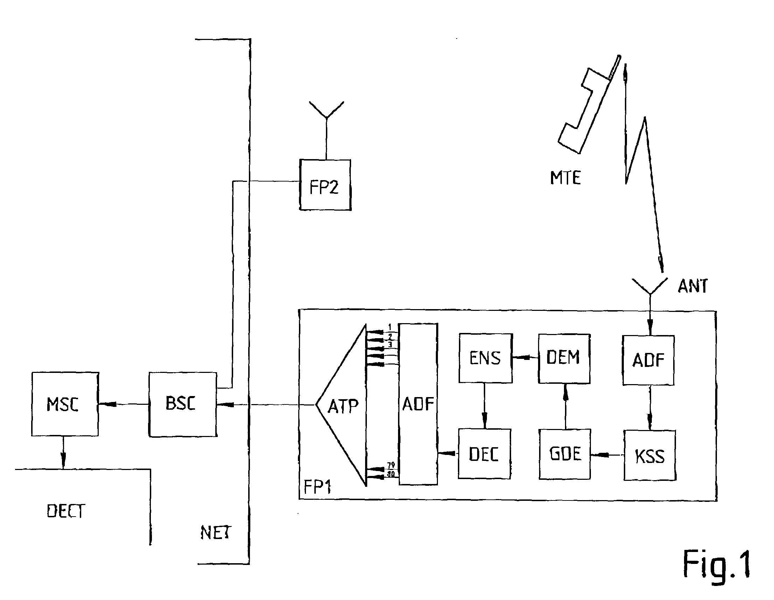

Fig.1 zeigt zwei Basisstationen FP1, FP2 eines Mobilfunknetzes, z.B. eines GSM-Netzes, wobei sich in der Zelle der Basisstation FP1 ein Mobilteil MTE befindet. Den Basisstationen FP1, FP2 sowie anderen Basisstationen ist eine Basisstationssteuerung BSC zugeordnet und dieser ist Mobilfunkschalteinheit MSC übergeordnet, die Zugriff zu anderen, hier nicht näher gezeigten Einheiten des Netzes NET hat. Die Basisstationssteuerung BSC steht über eine geeignete Schnittstelle mit einem Festnetz, z.B. mit einem ISDN-Netz ISDN in Verbindung.

Der Aufbau einer Basisstation ist am Beispiel der Basisstation FP1 näher gezeigt, wobei die Pfeile den Weg einer über die Antenne ANT einlangenden Information bezeichnen. Nach der Antenne erfolgt ein analoges und digitales Filtern in einer Einheit ADF, eine Kanalschätzung und Störbefreiung in einer darauffolgenden Einheit KSS, eine gemeinsame Detektion in einer Einheit GDE, die Demodulation in einer Einheit DEM, eine Entschachtelung in einer Einheit ENS und eine Decodierung in einer Einheit DEC. Auf die Einheit DEC, den Decodierer, folgt ein Ausgangsdatenfeld ADF, welches die Verbindungen bereitstellt, im vorliegenden Beispiel bis zu 80 Verbindungen, und diese einer ATM-Paketierung ATP zuführt. Von dieser ATM-Paketierung ATP gelangen die Nachrichten über eine Leitung mit einer Übertragungsgeschwindigkeit von beispielsweise 2 MBit/s zu der Basisstationssteuerung BSC.

Die Erfindung ist zwar im Zusammenhang mit einem für GSM-Mobilfunksysteme verwendeten TDMA-Übertragungsverfahren beschrieben, doch sollte klar sein, daß es sich hier lediglich um ein Ausführungsbeispiel handelt und andere Multiplexverfahren in Verbindung mit einer ATM-Übertragung gleichfalls den Gegenstand der Erfindung bilden.

Bei den nun hier betrachteten GSM-Mobilfunksystemen werden in der Basisstation alle 20 ms Übertragungsrahmen für jede aktive Verbindung erzeugt und gegenwärtig in Richtung der Basisstationssteuerung BSC, d.h. uplink, mit Hilfe eines PCM 30 Submultiplexing übertragen, wobei die Übertragungsleitung wie bereits erwähnt üblicherweise für eine Übertragungsgeschwindigkeit von 2 MBit/s eingerichtet ist. Bei Anwendung. einer "Fullrate"-Codierung sind die Übertragungsrahmen je 260 Bits lang, wozu gegebenenfalls noch Kontrollinformationen kommen, und durch das PCM 30 Submultiplexing werden diese 260 Bits für die Übertragung auf 130 aufeinanderfolgende PCM-Rahmen verteilt. Die PCM-Rahmen sind alle 125 µs getaktet und alle 125 µs werden 2 Bits des Übertragungsrahmens abtransportiert, sodaß der Abtransport eines vollständigen Ubertragungsrahmens 16,25 ms benötigt.

Will man dagegen die Übertragungsrahmen in ATM-Zellen, z.B. in sogenannte AAL2-Minizellen einpacken und zum Abtransport in uplink-Richtung, etwa von der Basisstation zur Basisstationssteuerung bereitstellen, um die Technologie von ATM-Übertragungstrecken zu nutzen, so ist folgendes zu beachten: Da die volle Übertragungsbandbreite für den Transport auf einer ATM-Übertragungsstrecke zur Verfügung steht, benötigt der Abtransport eines Übertragungsrahmens mit 260 Bits ca. 126,95 µs, nämlich 32,5 Bytes * 3,90625 µs/Byte, wozu noch der ATM-Overhead kommt. Ausgegangen wird dabei von einer vergleichbaren Geschwindigkeit der Übertragungsieitung von 2 MBit/s.

Die Zeitdauer des Abtransports ist ein wichtiger Anteil für die beim Transport des Übertragungsrahmens entstehende Verzögerungszeit. Ein weiterer wichtiger Anteil der Verzögerungszeit ist die variable Wartezeit, die jeder Übertragungsrahmen auf seinen Abtransport warten muß. Bei dem Abtransport der Übertragungsrahmen mit dem erwähnten PCM 30 Submultiplexing entsteht in derzeitigen GSM-Systemen keine Wartezeit, da der Übertragungsrahmen unmittelbar vor Beginn des Abtransports erzeugt wird. Will man jedoch Übertragungsrahmen über ATM-Zellen abtransportieren, so entsteht eine Wartezeit, wenn mehrere Übertragungsrahmen gleichzeitig zum Abtransport erzeugt werden oder wenn Übertragungsrahmen erzeugt werden, solange noch andere Übertragungsrahmen auf den Abtransport warten.

Dabei werden im schlechtesten Fall sämtliche Übertragungsrahmen zum selben Zeitpunkt für die ATM-Übertragung fertiggestellt. Dann ist die Verteilung der Wartezeit für die Übertragungsrahmen diskret gleich verteilt vom 0-ten bis zum (n-1)-ten Vielfachen der Abtransportdauer eines Übertragungsrahmens, wobei n die Anzahl der gleichzeitig zum Abtransport erzeugten übertragungsrahmen ist. Die mittlere Wartezeit beträgt dann das n/2 Vielfache der Abtransportdauer eines Übertragungsrahmens und die maximale Wartezeit ist das (n-1)-fache der Abtransportdauer.

Im besten Fall werden alle Übertragungsrahmen zu unterschiedlichen Zeitpunkten für die ATM-Übertragung fertiggestellt und es gibt dann keine Wartezeiten zwischen der Fertigstellung der Übertragungsrahmen zum Abtransport und dem Beginn des Abtransports. Von dem oben genannten Beispiel, bei welchem die Übertragungsrahmen 260 Bit lang sind und mit 2 MBit/s übertragen werden, ausgehend, kann die mögliche Einsparung an Verzögerung für die Übertragungsrahmen im Mittel bis zu ca. 7,6 ms und im höchsten Fall bis zu ca. 15 ms betragen.

In einer GSM-Basisstation liegen bei einer Fullrate Codierung bis zu 120 Verbindungen je PCM 30 Leitung vor und die Übertragungsrahmen der verschiedenen Verbindungen der acht TDMA Zeitschlitze einer bestimmten Trägerfrequenz werden in Abständen von 577 µs am Beginn eines jeden 20 ms langen Zeitrahmens zum Abtransport fertiggestellt. In der 6-ten bis zur 20-ten Millisekunde des Zeitrahmens werden keine Übertragungsrahmen mehr zum Abtransport fertiggestellt.

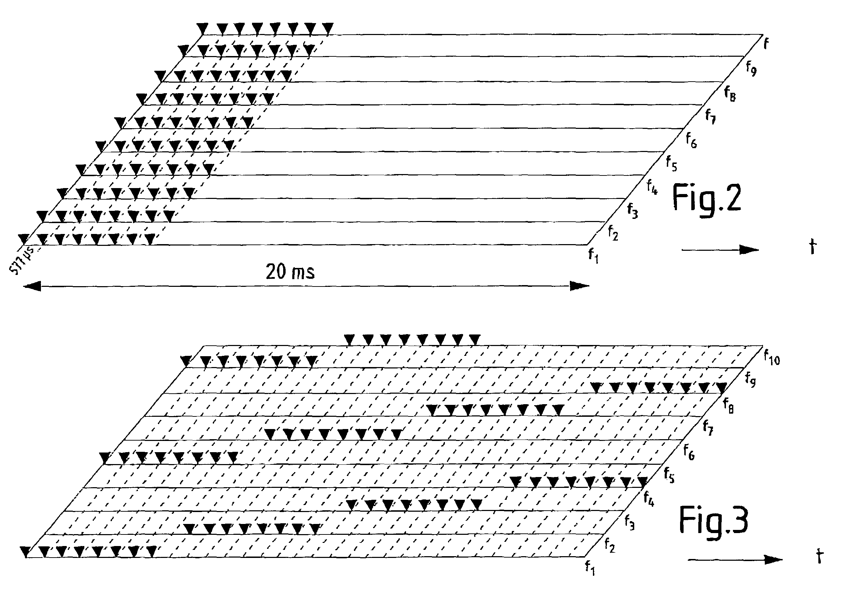

Obiges wird im folgenden unter Bezugnahme auf Fig.2 besser veranschaulicht, wobei ein 20 ms-Zeitrahmen gezeigt ist und hier zur Vereinfachung lediglich 10 Trägerfrequenzen angenommen werden, die mit f1 bis f10 bezeichnet sind. Die Zeitpunkte für die Fertigstellung von Übertragungsrahmen sind mit einem Pfeil angedeutet und Fig.2, welche sich auf den Stand der Technik bezieht, zeigt, daß der Beginn der Zeitrahmen für die unterschiedlichen Trägerfrequenzen synchronisiert ist, was zu dem bereits erwähnten Problem mit der Verzögerung des Abtransportes führt.

Die Erfindung sieht daher ein Verfahren vor, das in Fig.3 veranschaulicht ist, wobei ebenso von 8 Zeitschlitzen und 10 Trägerfrequenzen, somit 80 möglichen Verbindungen ausgegangen wird. Demnach wird der jeweilige Beginn des 20 ms-Zeitrahmens für eine Trägerfrequenz so versetzt, daß die Zeitpunkte für die Fertigstellung der Übertragungsrahmen möglichst gleichmäßig über den gesamten Zeitrahmen verteilt sind. Die Darstellung nach Fig. 3 zeigt natürlich nur eine mögliche Verteilung innerhalb des Zeitrahmens und es ist klar, daß zur Steuerung des Ausgangsdatenfeldes ADF in der Basisstation FP1 zur Fertigstellung der Übertragungsrahmen unterschiedliche Algorithmen verwendet werden können, die auch auf stochastischen oder pseudostochastischen Grundsätzen beruhen können. Dabei ist es dem Fachmann klar, daß das "Verteilungsmuster" der Fertigstellungszeitpunkte auch dann befriedigende Ergebnisse liefern kann, wenn es anders aussieht als in Fig.3 gezeichnet, und in diesem Sinne ist auch der Begriff "weitgehend gleichmäßig verteilt" zu verstehen.

Die Erfindung ermöglichst es, daß der Zeitgewinn beim Abtransport der Übertragungsrahmen, der sich durch die ATM-Technik erreichen läßt, erhalten bleibt und nicht wieder durch eine Verlängerung der Wartezeit zwischen dem Fertigstellen der Übertragungsrahmen und dem Beginn ihres Abtransports verloren geht.

## Patentansprüche

1. Verfahren zum Weiterleiten digitaler, in einem TDMA-System erzeugten Information, bei dem
- die Übertragungsrahmen jeder Verbindung in ATM-Zellen verpackt und diese Zellen über eine ATM-Übertragungsstrecke übertragen werden,
- die Zeitpunkte der Fertigstellung der Übertragungsrahmen der Verbindungen für die einzelnen Trägerfrequenzen des TDMA-Systems mit einer solchen zeitlichen Versetzung gewählt werden, daß diese Zeitpunkte über jeden einzelnen Zeitrahmen des TDMA-Systems weitgehend gleichmäßig verteilt sind.

2. Verfahren nach Anspruch 1, bei dem
die Information in einem Mobilfunksystem erzeugt und von einer Basisstation zu Steuer- und Verarbeitungseinheiten des Mobilfunknetzes in ATM-Zellen übertragen wird.

3. Verfahren nach Anspruch 2, bei dem
die Information in ATM-Zellen zu einer Basisstationssteuerung übertragen wird.

4. Basisstation (FP1) eines nach einem TDMA-Verfahren arbeitenden Mobilfunksystems,
- die zum Empfang von Informationen mobiler Teilnehmer und zur Weiterleitung dieser Informationen zu Steuer- und Verarbeitungseinheiten des Mobilfunknetzes (NET) eingerichtet ist,
- die ein Ausgangsdatenfeld (ADF) aufweist, das zur Bereitstellung der Übertragungsrahmen für jede Verbindung eingerichtet und mit einer ATM-Paketierung (ATP) zum Verpacken der Übertragungsrahmen in ATM-Zellen verbunden ist, welche zur Weiterleitung an eine Steuer- und Verarbeitungseinheit (BSC) bestimmt sind, und
- wobei das Ausgangsdatenfeld dazu eingerichtet ist, die Übertragungsrahmen der Verbindungen für die elinzelnen Trägerfrequenzen des TDMA-Systems mit einer solchen zeitlichen Versetzung zu Zeitpunkten fertigzustellen, die über jeden einzelnen Zeitrahmen des TDMA-Systems weitgehend gleichmäßig verteilt sind.

5. Basisstation (FP1) nach Anspruch 4,
die als Basisstation eines GSM-Netzes ausgebildet ist.

## Claims

1. Method for forwarding digital information generated in a TDMA system, in which method
- the transmission frames of each connection are packed in ATM cells and these cells are transmitted via an ATM transmission link,
- the times of completion of the transmission frames of the connections for the individual carrier frequencies of the TDMA system are selected with such a time offset that these times are largely uniformly distributed over each individual time frame of the TDMA system.

2. Method according to Claim 1, in which the information is generated in a mobile radio system and transmitted in ATM cells from a base station to control and processing units of the mobile radio network.

3. Method according to Claim 2, in which the information is transmitted in ATM cells to a base station controller.

4. Base station (FP1) of a mobile radio system operating in accordance with a TDMA method,
- which is set up for receiving information from mobile subscribers and forwarding this information to control and processing units of the mobile radio network (NET),
- which exhibits an output data section (ADF) which is set up for providing the transmission frames for each connection and is connected to an ATM packet assembler (ATP) for packing the transmission frames in ATM cells which are intended for forwarding to a control and processing unit (BSC), and
- the output data section being set up for completing the transmission frames of the connections for the individual carrier frequencies of the TDMA system with such a time offset with respect to times which are largely uniformly distributed over each individual time frame of the TDMA system.

5. Base station (FP1) according to Claim 4, which is constructed as the base station of a GSM network.

## Revendications

1. Procédé destiné à la transmission d'une information numérique générée dans un système AMRT (ou TDMA) au cours duquel
- les cadres de transmission de chaque liaison est empaquetée dans des cellules MTA (ou ATM) et ces cellules sont transmises par l'intermédiaire d'une ligne de transmission à mode de transmission asynchrone (MTA),
- les instants de l'achèvement des cadres de transmission des liaisons sont choisis, pour les diverses fréquences porteuses du système AMRT, avec un retard dans le temps tel que ces instants sont répartis d'une façon largement régulière sur chacun des cadres de temps du système AMRT.

2. Procédé selon la revendication 1 au cours duquel
- l'information est générée dans un système de radio mobile et transmise, dans des cellules à mode de transmission asynchrone, par une station de base à des unités de contrôle et de traitement du réseau de radio mobile.

3. Procédé selon la revendication 2 au cours duquel l'information est transmise, dans des cellules à mode de transmission asynchrone, à une commande de stations de base.

4. Station de base (FP1) d'un système de radio mobile fonctionnant selon un procédé AMRT
- qui est conçue pour la réception d'informations provenant d'utilisateurs mobiles et pour la retransmission de ces informations à des unités de contrôle et de traitement du réseau de radio mobile (NET),
- qui comporte un champ de données de sortie (ADF), conçu pour mettre à disposition les cadres de transmission pour chaque liaison, et qui est relié à un paqueteur (ATP) à mode de transmission asynchrone destiné à empaqueter les cadres de transmission dans des cellules à mode de transmission asynchrone, lesquelles sont destinées à être retransmises une unité de contrôle et de traitement (BSC) et
- le champ de données de sortie étant conçu pour achever les cadres de transmission des liaisons pour les diverses fréquences porteuses du système AMRT, à des instants ayant un retard dans le temps tel qu'ils sont répartis d'une façon largement régulière sur chacun des cadres de temps du système AMRT.

5. Station de base (FP1) selon la revendication 4 qui est conçue comme station de base d'un réseau GSM.
